# FASCICULE DE BREVET EUROPEEN

(11) **EP 0 686 312 B1**
(45) Date de publication et mention de la délivrance du brevet: **17.12.1997**
(21) Numéro de dépôt: 94906358.0
(22) Date de dépôt: 24.02.1994
(51) Int. Cl.: H01M 6/52, H01M 10/54

(54) **PROCEDE ET INSTALLATION DE TRI DES PILES ET ACCUMULATEURS USAGES**
VERFAHREN UND VORRICHTUNG ZUM SORTIEREN VON VERBRAUCHTEN BATTERIEN UND AKKUMULATOREN
USED BATTERY AND CELL SORTING METHOD AND APPARATUS

(30) Priorité: 25.02.1993 EP 93810138
(43) Date de publication de la demande: 13.12.1995
(73) Titulaire: TITALYSE S.A., 1217 Meyrin (CH)
(72) Inventeur: WIAUX, Jean-Pol, CH-1257 La Croix-de-Rozon (CH); LAZOUNI, Abdelkrim, CH-1201 Genève (CH); INDACO, Antoine, CH-1003 Lausanne (CH)
(74) Mandataire: Cronin, Brian Harold John
(86) Numéro de dépôt international: IB9400022
(87) Numéro de publication internationale: WO9419838

(56) Documents cités:
- WO-A-91/15036
- WO-A-92/17791
- DE-U- 9 210 203
- PATENT ABSTRACTS OF JAPAN vol. 9, no. 295 (E-360)(2018) 21 Octobre 1985 & JP,A,60 136 174 (AKIRA NAKAMURA) 19 Juillet 1985
- PATENT ABSTRACTS OF JAPAN vol. 11, no. 204 (E-520)(2651) 2 Juillet 1987 & JP,A,62 029 072 (NOMURA KOSAN K.K.) 7 Février 1987

## Description

La présente invention se rapporte à un procédé et à une installation de tri de piles et accumulateurs usagés.

Depuis l'apparition des premières piles Zn-carbone sur le marché au début du siècle, la consommation de ces sources d'énergie portables ne cesse d'augmenter, que ce soit dans les activités professionnelles, ou dans la vie quotidienne. Cette augmentation de la consommation de piles ou accumulateurs a encore accéléré durant ces vingt dernières années avec l'accroissement de l'utilisation des appareils électriques ou électroniques portables.

Parallèlement à cette augmentation de consommation, d'autres types de piles ou accumulateurs plus performants font leur apparition sur le marché: les piles alcalines au Zn-MnO₂ au milieu des années 70, les piles au lithium et à l'argent au début des années 80, et les accumulateurs rechargeables au Ni-Cd durant ces dernières années.

Actuellement, la consommation de piles et accumulateurs en Europe occidentale est estimée à 100'000 tonnes par année, réparties en une dizaine de types de nature chimique différente.

Malgré les efforts considérables de la part des producteurs pour diminuer la charge des éléments très toxiques tels que le cadmium et le mercure, les piles et accumulateurs usagés, dû à leur contenu de métaux lourds, sont considérés comme un déchet toxique et doivent être traités spécifiquement.

La question du problème du traitement de ces piles et accumulateurs usagés est le sujet de plusieurs débats depuis douze ans. Cette question devient de plus en plus prioritaire pour les pays occidentaux industrialisés, car la masse des piles et accumulateurs usagés rejetés dans les ordures urbaines augmente sans cesse. On comprend aisément les conséquences désastreuses sur l'environnement dues à l'émission des métaux lourds provenant de l'incinération de ces ordures urbaines.

Pour faire face à cette situation, les pouvoirs publics ont organisé depuis quelques années des campagnes de collecte des piles et accumulateurs usagés pour leurs traitements ultérieurs. Plusieurs tentatives et essais ont démontré qu'une collecte sélective de ces piles et accumulateurs usagés du grand public est techniquement impossible. Ces piles et accumulateurs sont donc collectés sous forme de mélanges, constitués par environ 200 à 250 types selon leur dimension, leur forme et leur nature chimique. Ces mélanges de piles et accumulateurs usagés sont actuellement stockés ou mis en décharge contrôlée, faute d'un procédé de traitement techniquement et économiquement fiable.

Plusieurs techniques de traitement-recyclage des piles et accumulateurs ont été développées, et sont actuellement opérationnelles au niveau industriel. Ces procédés sont généralement développés pour traiter un seul type de piles ou d'accumulateurs provenant des rebuts de production ou d'une collecte sélective.

Ces procédés de traitement et de recyclage sont des technologies complexes. Pour un type de piles ou d'accumulateurs donné, le procédé doit pouvoir traiter plusieurs composés chimiques métalliques ou non-métalliques, dont la séparation demande un contrôle sévère des conditions opérationnelles. En général, le seuil admissible d'éléments étrangers de ces procédés, par exemple un autre type de piles ou d'accumulateurs dans une charge donnée, ne peut pas dépasser 1% du poids pour le recyclage des accumulateurs nickel-cadmium, et environ 3% du poids pour le recyclage des piles au zinc.

Plusieurs possibilités ont été envisagées pour le tri des piles ou accumulateurs usagés selon leur nature chimique, à partir des mélanges collectés auprès du grand public.

En tenant compte de leur taille, de leur forme et de leur nature chimique, environ 200 à 250 types de piles ou accumulateurs sont répertoriés sur le marché. Une telle diversité des lots à trier nécessite l'établissement d'un schéma de tri logique afin d'éviter un travail trop fastidieux et inutile. En général, la technique de tri des piles ou accumulateurs usagés comprend au moins deux étapes successives :
- Première étape : un tri mécanique préalable du lot afin de séparer les piles ou accumulateurs selon leur forme et/ou leurs dimensions.
- Deuxième étape : pour une forme et/ou des dimensions données, la nature chimique des piles ou accumulateurs est déterminée par la mesure d'un ou plusieurs paramètres caractéristiques de la pièce concernée.

Par exemple, la nature chimique d'une pile ou d'un accumulateur peut être déterminée par la mesure de sa masse spécifique ou par la mesure des propriétés thermiques, acoustiques ou électriques. Par exemple, l'analyse de la vitesse de propagation des ultrasons à travers le corps de la pièce à analyser, ou la mesure du pouvoir de dissipation thermique de la pièce après une courte période de chauffage, ou encore la mesure de la résistance électrique résiduelle, sont des indications directement liées à la composition ou/et à la structure interne de la pile ou de l'accumulateur usagé. Cependant, après usage ou pendant leur stockage, ces méthodes ne peuvent pas garantir une fiabilité de tri suffisante.

L'analyse de la composition interne de la pile ou de l'accumulateur s'impose donc comme méthode fiable pour la détermination de leur nature chimique. Toutefois, pour des raisons techniques, économiques et de sécurité, l'analyse de la composition interne doit s'effectuer avec des piles ou accumulateurs non ouverts. La méthode d'analyse utilisée devrait donc permettre de supprimer l'influence des couches extérieures de l'enveloppe de la pile ou de l'accumulateur.

La publication WO91/15036 décrit un dispositif et un procédé pour trier les piles ou accumulateurs usagés selon leur nature chimique. Le dispositif de mesure est basé sur l'analyse de l'effet inductif produit par les matériaux contenus dans la pile ou l'accumulateur, dont les propriétés ferromagnétiques sont différentes selon leur nature chimique. Le procédé de mesure utilisant ce dispositif est basé sur l'application au circuit d'excitation, d'une manière consécutive, d'au moins deux amplitudes de tension différentes à une même fréquence, ou de deux fréquences différentes pour une même amplitude de tension.

Toutefois, la détermination de la masse ferromagnétique totale par une mesure globale exige un tri mécanique très poussé pour séparer les piles et accumulateurs usagés selon leurs dimensions exactes.

Un schéma de tri connu est un compromis de différentes méthodes semi-automatiques et manuelles *(Lindhqvist T. & Christansen K. : Collection and sorting of used batteries - University of Lund (Sweden) - 20 Jan 1990).* Ce schéma de tri comprend plusieurs étapes successives et peut être résumé de la manière suivante :
- Tri mécanique pour séparer des éléments dont le diamètre est plus grand que 37 mm.
- Tri mécanique pour séparer des éléments de diamètre inférieur à 37 mm en plusieurs groupes selon chaque dimension standard.
- Pour chaque dimension standard, les éléments au Zn-carbone, au Pb-acide et au mercure sont séparés par une mesure de poids spécifique.
- Pour chaque dimension standard, les piles alcalines Zn-MnO₂ et les accumulateurs au Ni-Cd sont séparés par la mesure de la vitesse de propagation des ultrasons.
- Les pièces de dimension non-standard, ou de diamètre supérieur à 37 mm, sont triées manuellement.

La publication W092/17791 décrit un procédé perfectionné de tri de piles et accumulateurs usagés de différentes formes et dimensions et de différentes compositions chimiques, qui comporte un tri mécanique selon les formes et les dimensions, suivi d'un tri selon la composition chimique. Le tri selon la composition chimique comporte l'élaboration, par le passage d'une pile ou d'un accumulateur à vitesse constante au travers d'une bobine, d'une réponse inductive à deux composantes, représentative de la masse ferromagnétique de la pile ou de l'accumulateur, et de la distribution de la masse ferromagnétique.

Selon un schéma de tri de cette publication, l'étape préliminaire de tri mécanique comporte le tri en plusieurs groupes de piles et/ou accumulateurs de forme et de dimensions semblables. Ensuite, l'étape de tri chimique par élaboration d'une réponse inductive à deux composantes s'effectue, soit pour tous les groupes, soit pour certains groupes nécessitant ce tri chimique, les autres groupes n'étant pas assujettis à ce tri chimique. Enfin, l'étape de tri chimique est suivie par le regroupement de toutes les piles et accumulateurs, assujettis ou non au tri chimique, en groupes dont la composition chimique est adaptée au traitement pour la récupération des métaux.

Toutefois, ce procédé amélioré a certaines insuffisances. Malgré de grands efforts pour en augmenter la capacité, il n'a pas été possible de développer des têtes permettant à la fois un tri efficace d'un grand débit et un pourcentage faible d'erreurs de tri ou de rejets. Donc, le traitement de grands débits nécessite l'emploi de plusieurs têtes de mesure pour le tri selon la composition chimique, avec plusieurs ordinateurs de contrôle, donc un coût elévé. En outre, certaines catégories de piles, notamment les prismes 4.5V au ZnC, présentent un problème dans ce schéma de tri.

### Description de l'Invention

L'invention a pour objet un procédé simplifié permettant de trier et de séparer automatiquement les piles ou accumulateurs usagés selon leurs formes, leurs dimensions et leur nature chimique, ceci à grands débits. Le procédé et les équipements propres à cette invention obviennent les inconvénients du procédé connu le plus perfectionné et permettent de trier et de séparer d'une manière rapide, fiable et économique les piles ou accumulateurs usagés selon leur nature chimique, quels que soient leurs formes, leurs dimensions ou leur état.

La présente invention propose donc un procédé simplifié de tri de piles et accumulateurs usagés de différentes formes et dimensions et de différentes compositions chimiques, comportant au moins une étape de tri mécanique selon les formes et les dimensions, et au moins une étape de tri selon la composition chimique, de préférence basée sur la mesure d'au moins un paramètre physique.

Selon l'invention, les piles et les accumulateurs de différentes formes et dimensions et de différentes compositions chimiques sont soumis à une étape de tri magnétique, par l'application d'un champ magnétique, afin de séparer, par l'action de la force magnétique, les piles et les accumulateurs ayant un composant ferromagnétique des piles et des accumulateurs sans composant ferromagnétique. Cette séparation magnétique est suivie d'une étape de tri selon les dimensions des piles et des accumulateurs ayant un composant ferromagnétique, afin de les séparer en au moins deux groupes, de préférence en trois groupes : multicells, prismatiques et monocells ferromagnétiques, ainsi qu'une étape de tri selon les dimensions des piles et des accumulateurs sans composant ferromagnétique, afin de les séparer en deux groupes, multicells et monocells non-ferromagnétiques. Ensuite, les piles et les accumulateurs d'un ou plusieurs des groupes de piles et accumulateurs ainsi séparés sont soumis à au moins une étape de tri selon la composition.

Après tri, les piles et les accumulateurs sont regroupés selon leur compatibilité chimique pour être dirigés vers les filières adéquates de recyclage.

Par rapport au procédé connu le plus perfectionné, le procédé de l'invention permet :
- une simplification de la structure de tri;
- une installation plus compacte;
- un soulagement de la ou les tête(s) de mesure pour le tri selon la composition chimique des monocells par une réduction sensible du débit, permettant ainsi d'utiliser un nombre de têtes moins important;
- une solution au problème de tri et de distribution des prismes, notamment les piles ZnC et alcalines (4.5V);
- une augmentation de la vitesse de tri;
- une distribution unitaire des multicells simplifiée;
- un flux de piles mieux contrôlé;
- une diminution des coûts de l'installation;
- une augmentation sensible de la sélectivité du tri; et
- une augmentation sensible de la qualité et/ou de la pureté des lots récupérés de manière à optimiser les opérations de recyclage subséquentes.

Usuellement, l'étape finale de tri comporte, pour le groupe des monocells ferromagnétiques, un tri selon la composition comportant la mesure d'au moins un paramètre physique afin de séparer les monocells à composant ferromagnétique, notamment monocells nickel-cadmium, des monocells à enveloppe ferromagnétique, notamment monocells à mercure, à lithium et à argent ainsi que les monocells alcalines avec ou sans mercure.

L'étape de tri magnétique est de préférénce précédée par au moins une étape de tri préliminaire selon les dimensions, afin de séparer les piles ou accumulateurs très grands, appelés "big blocks", notamment les accumulateurs Pb-acide, et/ou très petits (boutons).

Les étapes de tri selon les dimensions des multicells et monocells s'effectuent par une méthode mécanique, telle que le passage à travers une grille usuellement vibrante d'une dimension adéquate et d'une maille choisie.

Dans un schéma préféré, après l'étape de tri selon les dimensions des piles et des accumulateurs sans composant ferromagnétique, il est prévu un tri selon les dimensions ou autres propriétés intrinsèques des multicells non-ferromagnétiques, et donc selon leur composition, au moyen d'un détecteur de dimensions ou d'un détecteur d'au moins une autre propriété intrinsèque.

L'invention propose également une installation simplifiée de tri des piles et accumulateurs usagés de différentes formes et dimensions et de différentes compositions chimiques pour la mise en oeuvre du procédé selon l'invention, telle qu'exposée dans les revendications.

Le schéma de tri selon l'invention permet donc de simplifier les procédures de tri et les équipements utilisés, tout en respectant les exigences de pureté des procédés de traitement sélectifs subséquents.

### Description des Dessins

Dans les dessins ci-annexés :
- La Figure 1 est un schéma du tri des piles usagées selon l'invention; et
- La Figure 2 est un schéma de principe de l'installation de tri des piles selon l'invention.

Le Tableau I illustre la composition moyenne statistique d'un mélange "grand public".

**TABLEAU I**

| **TYPE** | **% Poids** | **Unités/Tonne** |
|---|---|---|
| Grandes Unités | 0 - 5 | 0 - 5 |
| Multicells | 0 - 5 | 0 - 50 |
| Boutons | 0 - 0.5 | 0 - 1500 |
| Petits Cylindres (D<17mm) | 30 - 40 | 15000 - 20000 |
| Grands Cylindres (D>20mm) | 30 - 40 | 4000 - 5000 |
| Prismes | 30 - 40 | 2500 - 3000 |

Le Tableau II illustre la classification des différents types de piles et accumulateurs obtenus sur un mélange "grand public", après enlèvement des grandes unités et des boutons, en fonction du schéma de tri de l'invention.

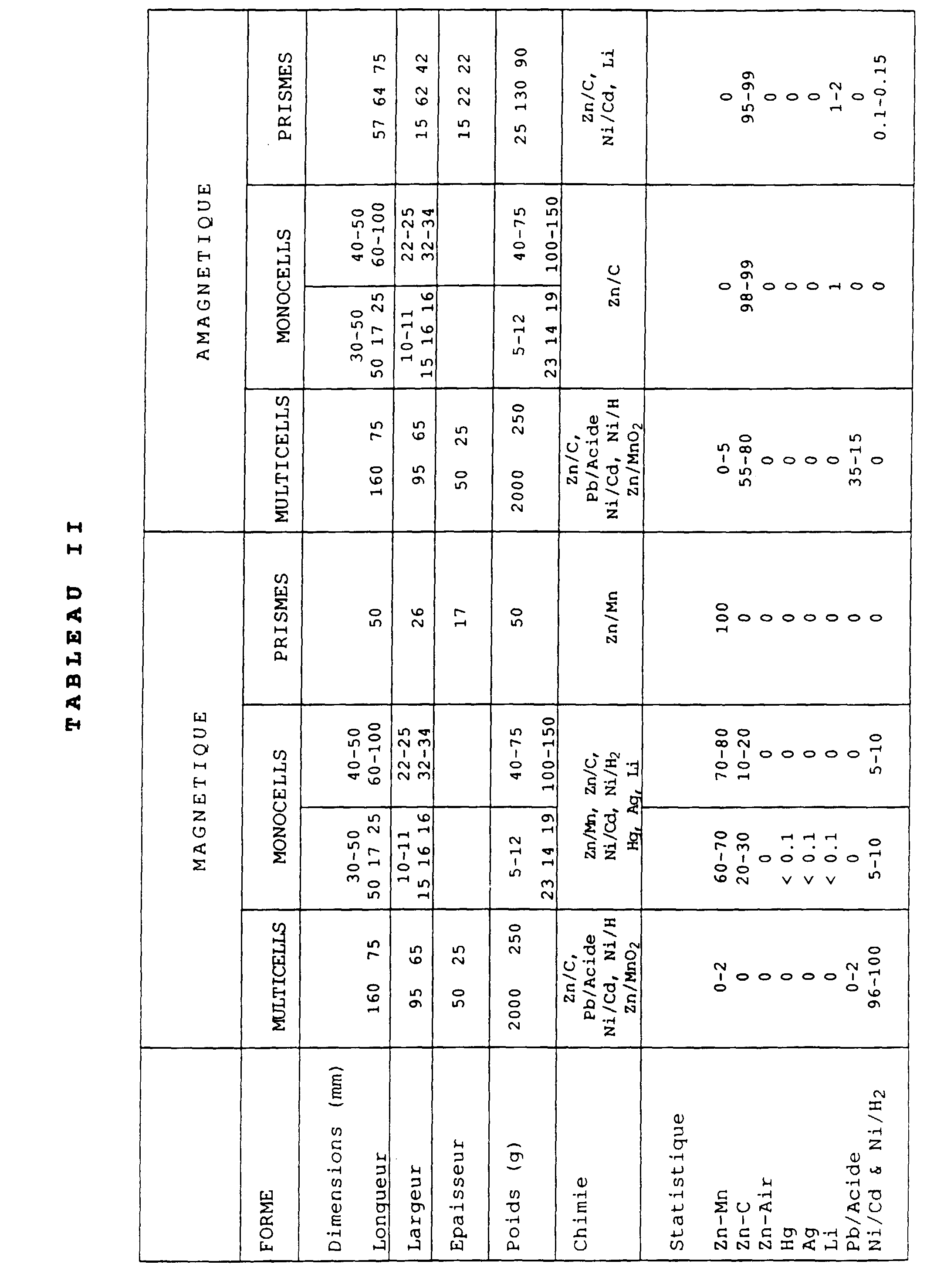

Etant donné que les exigences des procédés existants pour le traitement sélectif des piles et accumulateurs usagés se limitent de 1 à 3% du poids d'éléments étrangers, le but du tri est de répartir le mélange de piles ou accumulateurs usagés en sept groupes ou lots au minimum, en préparation aux traitements adéquats de recyclage :
Lot I composé des accumulateurs au Pb-Acide de différentes tailles. Dans ce lot, on retrouve les éléments triés sous forme de "big-blocks" (2) et les multicells (16.2).
Lot II composé des piles boutons.
Lot III composé des piles au Zn-carbone, Zn-MnO₂, ou Leclenché. Dans ce lot, on retrouve les monocells magnétiques (12.5), les monocells et les éléments prismatiques amagnétiques (7.2), et les multicells amagnétiques (16.1).
Lot IV composé des piles alcalines avec ou sans mercure. Ce lot comprend les éléments monocells magnétiques (12.4) et les prismatiques (6.2)
Lot V composé des accumulateurs au Ni-Cd et Ni-hydrogène. Ce lot est composé des éléments multicells magnétiques (6.1) et des monocells magnétiques (12.1).
Lot VI composé de 30 à 50 % de piles au mercure mélangées avec d'autres types tels que les piles à l'oxyde d'argent (12.2).
Lot VII composé des piles au lithium recueillies à la sortie (12.3).

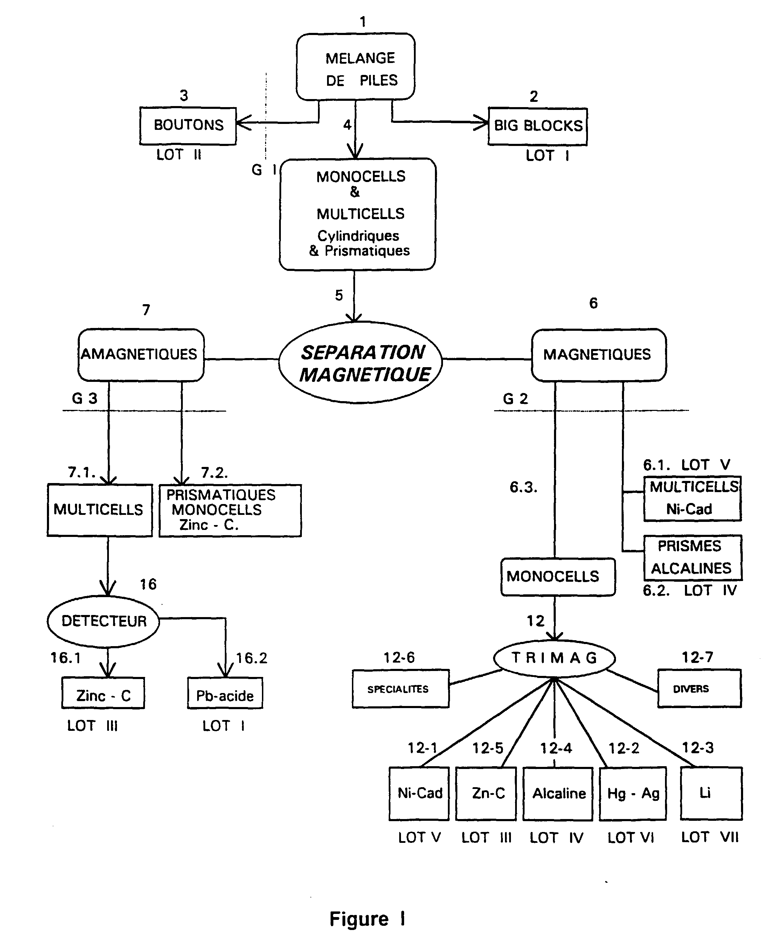

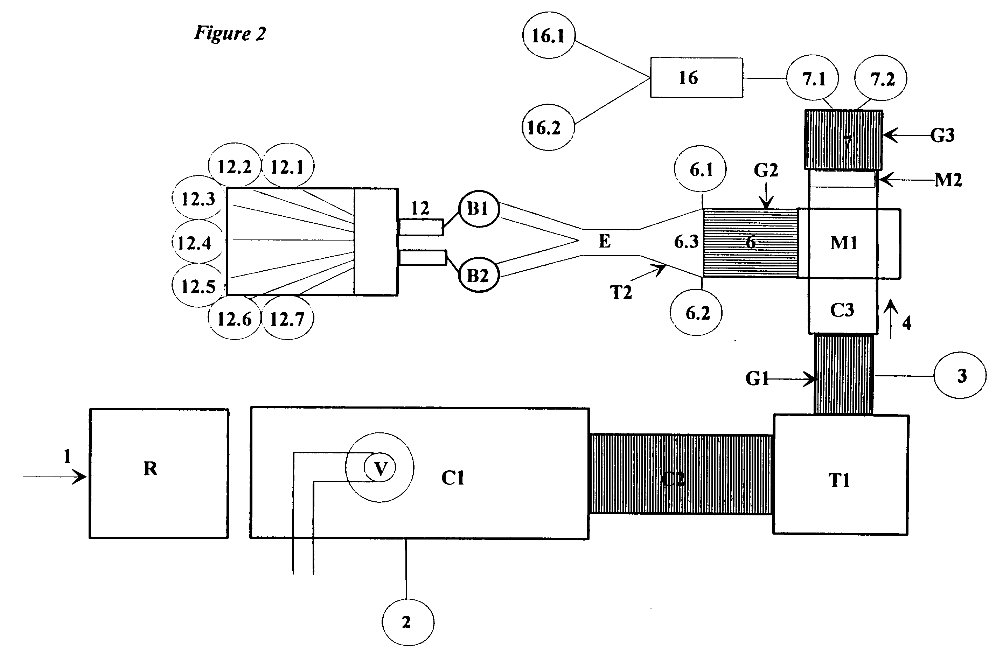

Selon le schéma de tri de la Figure 1 et l'installation correspondante de la Figure 2, ce tri est effectué de la manière suivante.

Un mélange de piles et d'accumulateurs 1 est chargé dans un renverseur R. Il est ensuite soumis à un tri préliminaire sur un convoyeur C1 afin d'écarter les grandes unités 2 d'un poids de 2 à 20kg ("big blocks", pour la plupart Pb-acide). Le flux des piles est déversé dans une trémie T1 au moyen d'un deuxième convoyeur incliné C2. A ce niveau, une ventilation permet d'enlever les poussières et les éléments légers. Au moyen d'une grille G1, les boutons sont recueillis en 3. Le mélange restant 4, composé de prismes, monocells et multicells de Zn, Ni, Pb, Hg, Li, etc... est ensuite soumis à un tri magnétique 5(M) afin de séparer, par l'action de la force magnétique, les piles et les accumulateurs ayant un composant ferromagnétique 6 des piles et des accumulateurs amagnétiques 7. Le tri magnétique est composé d'un convoyeur à suspension magnétique ("overband") M1 et d'une poulie magnétique M2 (Figure 2).

Cette séparation magnétique 5 (M) est suivie d'un tri selon les dimensions afin de séparer, d'une part, au moyen d'un grillage G2, les piles et les accumulateurs ferromagnétiques 6 en trois groupes, multicells ferromagnétiques 6.1, les alcalines prismatiques 6.2 et monocells ferromagnétiques 6.3, et, d'autre part, au moyen d'un grillage G3, les piles et les accumulateurs amagnétiques 7 en deux groupes, multicells amagnétiques 7.1 et monocells/prismes amagnétiques 7.2.

Les cinq groupes de piles et accumulateurs ainsi séparés sont ensuite triés et regroupés de la manière suivante.

Le groupe des monocells ferromagnétiques 6.3 est soumis à un tri selon la composition au moyen d'une tête de mesure 12 afin de séparer, notamment, les monocells nickel-cadmium et autres à composant ferromagnétique interne 12.1, des monocells à enveloppe ferromagnétique, soit monocells à mercure et à argent 12.2, au lithium 12.4, ainsi que les monocells alcalines Zn-MnO₂ avec ou sans mercure 12.4 et les ZnC 12.5.

Il est également prévu une sortie 12.6 pour les spécialités et une sortie 12.7 pour les divers.

Dans la sortie spécialités 12.6, on retrouve des éléments dont les propriétés ne sont pas encore classifiées dans le répertoire de la tête de tri (12).

Dans la sortie divers 12.7, on regroupe de préférence les éléments qui perturbent l'efficacité du tri et qui nécessitent une étage complémentaire pour leur classification finale.

Le tri selon les dimensions des piles et des accumulateurs amagnétique 7 est suivi d'un tri des multicells amagnétiques 7.1, au moyen d'un détecteur dimensionel 16, afin de les séparer en deux lots, ZnC 16.1 et Pb-acide 16.2.

L'installation de la Figure 2 a une capacité, par exemple, de 0.5 à 1 tonne par heure, ce qui représente plus de 20,000 unités par heure. Le mélange 1 est d'abord transféré dans un renverseur R qui le distribue sur une bande de transport C1, d'où les grandes unités ainsi que des débris éventuels sont enlevés manuellement ou mécaniquement. On peut aussi prévoir une grille au dessus du renverseur R pour séparer les grandes unités.

Les bandes de transport C1 et C2 amènent le mélange à la trémie T1, qui est équipée d'un extracteur vibrant et qui distribue le flux des piles sur une grille G1. C'est ici que les boutons 3 sont triés et collectés dans un bac. Une hotte d'aspiration V est prévue pour éliminer les poussières.

La grille G1 est suivie d'une bande de transport C3 ayant à une extrémité supérieure un tambour magnétique M2. L'ensemble est surmonté d'un convoyeur à suspension magnétique ("overband") M1. Le mélange restant 4, composé de prismes, monocells et multicells de Zn, Ni, Pb, Hg, Li, etc... est donc soumis par ce tambour M2 et par l'overband M1 à un tri magnétique séparant les piles et les accumulateurs ferromagnétiques 6, qui tombent sur la grille vibrante G2, des piles et des accumulateurs amagnétiques 7 qui sont dirigés vers la grille G3.

La grille vibrante G2 sépare les piles et les accumulateurs ferromagnétiques 6 en trois groupes, les multicells ferromagnétiques 6.1, les éléments prismatiques 6.2 et les monocells ferromagnétiques 6.3. Ces derniers se retrouvent dans une trémie T2, et au moyen d'un élévateur E, ils sont dirigés vers des bols vibrants B1 et B2 qui assurent la distribution unitaire des piles dans les têtes de tri 12.

Ces têtes 12 sont, par exemple, l'une de têtes décrite dans les publications W091/15036 ou WO92/17791 précitées, qui fournit un signal de tri en fonction des propriétés ferromagnétiques mesurées. Il peut s'agir également de tout autre appareil performant destiné au tri des piles, par exemple ceux fournis par la société FIRSTEC S.A. sous la dénomination "firstsort". Ces têtes peuvent trier par exemple une à deux unités par seconde.

Les piles et les accumulateurs amagnétiques 7 sont triés au moyen de la grille vibrante G3. Les monocells/prismes amagnétiques sont collectés en 7.2, tandis que les multicells amagnétiques 7.1, triées par le détecteur dimensionel 16, sont collectées en 16.1 pour les ZnC et en 16.2 pour les Pb acide. Le détecteur dimensionel 16 d'un type connu, par exemple avec palpeur ou détecteur optique, a une capacité de tri d'environ 20 à 60 unités par minute.

## Revendications

1. Procédé de tri de piles et accumulateurs usagés de différentes formes et dimensions et de différentes compositions chimiques, comportant au moins une étape de tri mécanique selon les formes et les dimensions, et au moins une étape de tri selon la composition, de préférence basée sur la mesure d'au moins un paramètre physique, caractérisé en ce que les piles et les accumulateurs de différentes formes et dimensions et de différentes compositions chimiques (4) sont soumis à :
(a) une étape de tri magnétique par l'application de champs magnétiques afin de séparer, par l'action de la force magnétique, les piles et les accumulateurs ayant un composant ferromagnétique (6), des piles et des accumulateurs sans composant ferromagnétique (7), suivie
(b1) d'une étape de tri selon les dimensions des piles et des accumulateurs ayant un composant ferromagnétique (6), afin de les séparer en au moins deux groupes, de préférence en trois groupes, multicells, prismatiques et monocells ferromagnétiques (6.1, 6.2, 6.3), et
(b2) d'une étape de tri selon les dimensions des piles et des accumulateurs sans composant ferromagnétique (7), afin de les séparer en deux groupes, multicells et monocells non-ferromagnétiques (7.1, 7.2), suivies
(c) d'au moins une étape de tri selon la composition des piles et des accumulateurs d'un ou plusieurs des groupes de piles et accumulateurs ainsi séparés.

2. Procédé de tri selon la revendication 1, caractérisé en ce que l'étape (c) comporte une étape de tri selon la composition pour le groupe des monocells ferromagnétiques (6.3).

3. Procédé de tri selon la revendication 2, caractérisé en ce que ladite étape de tri selon la composition comporte la mesure d'au moins un paramètre physique afin de séparer les monocells à composant ferromagnétique (notamment monocells nickel-cadmium) (12.1) des monocells à enveloppe ferromagnétique, notamment monocells à mercure et à argent (12.2), à lithium (12.3), ainsi que les monocells alcalines (12.4) et les piles Zinc-C à enveloppe ferromagnétique (12.5).

4. Procédé de tri selon l'une des revendications précédentes, caractérisé en ce que l'étape de tri magnétique (a) est précédée par au moins une étape de tri préliminaire selon les dimensions afin de séparer les piles ou accumulateurs très grands (2) et/ou très petits (3).

5. Procédé de tri selon l'une des revendications précédentes, caractérisé en ce que les étapes (b1 et b2) de tri selon les dimensions s'effectuent par une méthode mécanique, telle que le passage à travers une grille (G2,G3).

6. Procédé de tri selon l'une des revendications précédentes, caractérisé en ce que l'étape (b2) de tri selon les dimensions des piles et des accumulateurs sans composant ferromagnétique (7) est suivie d'un tri des multicells non-ferromagnétiques (7.1).

7. Procédé de tri selon la revendication 6, caractérisé en ce que ladite étape de tri des multicells non-ferromagnétiques (7.1) s'effectue au moyen d'un détecteur (16) des dimensions ou autres propriétés intrinsèques.

8. Installation de tri de piles et accumulateurs usagés de différentes formes et dimensions et de différentes compositions chimiques, pour la mise en oeuvre du procédé selon l'une des revendications précédentes, caractérisée en ce qu'elle comporte:
(A) des moyens de tri magnétique (M1, M2) des piles et des accumulateurs de différentes formes et dimensions et de différentes compositions chimiques, ces moyens agissant par l'application de champs magnétiques afin de séparer, par l'action de la force magnétique, les piles et les accumulateurs ayant un composant ferromagnétique (6) des piles et des accumulateurs sans composant ferromagnétique (7), suivis de :
(B1) des moyens de tri selon les dimensions (G2) des piles et des accumulateurs ayant un composant ferromagnétique, afin de les séparer en au moins deux groupes, de préférence en trois groupes : multicells, prismatiques et monocells ferromagnétiques (6.1, 6.2, 6.3), et
(B2) des moyens de tri selon les dimensions (G3) des piles et des accumulateurs sans composant ferromagnétique, afin de les séparer en deux groupes, multicells et monocells non-ferromagnétiques (7.1, 7.2), suivis
(C) des moyens de tri selon la composition (12;16) des piles et des accumulateurs d'un ou plusieurs des groupes de piles et accumulateurs ainsi séparés.

9. Installation selon la revendication 8, caractérisée en ce que les moyens de tri magnétique comportent un tambour magnétique rotatif (M2) et un convoyeur à suspension magnétique ("overband") (M1).

10. Installation selon la revendication 8 ou 9, caractérisée en ce que les moyens de tri selon la composition comportent au moins un dispositif de mesure (12) des propriétés ferromagnétiques des piles et/ou accumulateurs.

11. Installation selon la revendication 8, 9 ou 10, caractérisée en ce que les moyens de tri selon la composition comportent au moins un dispositif (16) de mesure des dimensions ou autres propriétés instrinsèques, des piles et/ou accumulateurs.

12. Installation selon n'importe laquelle des revendications 8 à 11, caractérisée en ce que lesdits moyens de tri selon les dimensions comportent des grilles (G2,G3), de préférence vibrantes.

## Patentansprüche

1. Verfahren zum Sortieren von verbrauchten Batterien und Akkumulatoren verschiedener Formen und Abmessungen und verschiedener chemischer Zusammensetzungen mit zumindest einem mechanischen Sortierschritt nach Formen und Abmessungen und zumindest einem auf der Zusammensetzung, vorzugsweise auf der Messung zumindest eines physikalischen Parameters, beruhenden Sortierschritt, dadurch gekennzeichnet, dass die Batterien und Akkumulatoren verschiedener Formen und verschiedener chemischer Zusammensetzungen (4) den folgenden Schritten unterworfen werden:
(a) einem magnetischen Sortieren durch die Anwendung magnetischer Felder, um durch die Wirkung der Magnetkraft Batterien und Akkumulatoren mit einer ferromagnetischen Komponente (6) von Batterien und Akkumulatoren ohne ferromagnetische Komponente (7) zu trennen, dieser Schritt gefolgt von
(bl) einem Sortieren der Batterien und Akkumulatoren mit einer ferromagnetischen Komponente (6) nach ihren Abmessungen, um sie in zumindest zwei Gruppen, vorzugsweise in drei Gruppen aufzutrennen, nämlich ferromagnetische Multizellen, prismatische Zellen und Einzelzellen (6.1, 6.2, 6.3), und
(b2) einem Sortieren der Batterien und Akkumulatoren ohne ferromagnetische Komponente (7) nach ihren Abmessungen, um sie in zwei Gruppen aufzutrennen, nämlich nichtferromagnetische Multi- und Einzelzellen (7.1, 7.2), diese Schritte gefolgt von
(c) zumindest einem Schritt, in dem die Batterien und Akkumulatoren einer oder mehrerer der so aufgetrennten Batterie- und Akkumulatorengruppen nach ihrer Zusammensetzung sortiert werden.

2. Sortierverfahren gemäss Anspruch 1, dadurch gekennzeichnet, dass Schritt (c) einen auf der Zusammensetzung beruhenden Sortierschritt für die Gruppe der ferromagnetischen Einzelzellen (6.3) umfasst.

3. Sortierverfahren gemäss Anspruch 2, dadurch gekennzeichnet, dass der benannte, auf der Zusammensetzung beruhende Sortierschritt die Messung zumindest eines physikalischen Parameters umfasst, um die Einzelzellen mit ferromagnetischer Komponente (namentlich Nickel-Cadmium-Einzelzellen) (12.1) von den Einzelzellen mit ferromagnetischer Hülle, namentlich Quecksilber- und Silber-Einzelzellen (12.2.), Lithium-Einzelzellen (12.3) sowie den alkalischen Einzelzellen (12.4) und den Zink-C-Batterien mit ferromagnetischer Hülle, (12.5) zu trennen.

4. Sortierverfahren gemäss einem der vorangehenden Ansprüche, dadurch gekennzeichnet, dass dem magnetischen Sortierschritt (a) zumindest ein Vorsortierschritt nach Abmessungen vorausgeht, um die sehr grossen (2) und/oder sehr kleinen (3) Batterien und Akkumulatoren abzutrennen.

5. Sortierverfahren gemäss einem der vorangehenden Ansprüche, dadurch gekennzeichnet, dass für Sortierschritte (b1 und b2) nach Abmessungen ein mechanisches Verfahren wie Durchgang durch einen Rost (G2, G3) verwendet wird.

6. Sortierverfahren gemäss einem der vorangehenden Ansprüche, dadurch gekennzeichnet, dass der Sortierschritt (b2) der Batterien und Akkumulatoren ohne ferromagnetische Komponente (7) nach ihren Abmessungen von einem Sortieren der nichtferromagnetischen Multizellen (7.1) gefolgt ist.

7. Sortierverfahren gemäss Anspruch 6, dadurch gekennzeichnet, dass der benannte Sortierschritt der nichtferromagnetischen Multizellen (7.1) mit einer Prüfsonde (16) für Abmessungen oder andere innewohnende Eigenschaften ausgeführt wird.

8. Vorrichtung zum Sortieren von verbrauchten Batterien und Akkumulatoren verschiedener Formen und Abmessungen und verschiedener chemischer Zusammensetzungen, um das Verfahren gemäss einem der vorangehenden Ansprüche auszuführen, dadurch gekennzeichnet, dass diese Vorrichtung die folgenden Organe umfasst:
(A) Organe (M1, M2) für ein magnetisches Sortieren der Batterien und Akkumulatoren verschiedener Formen und Abmessungen und verschiedener chemischer Zusammensetzungen, die durch die Anwendung magnetischer Felder wirken, um durch die Wirkung der Magnetkraft die Batterien und Akkumulatoren mit einer ferromagnetischen Komponente (6) von den Batterien und Akkumulatoren ohne ferromagnetische Komponente (7) zu trennen, diese Organe gefolgt von
(B1) Organen (G2) für ein Sortieren der Batterien und Akkumulatoren mit einer ferromagnetischen Komponente nach ihren Abmessungen, um sie in zumindest zwei Gruppen, vorzugsweise in drei Gruppen aufzutrennen, nämlich ferromagnetische Multizellen, prismatische Zellen und Einzelzellen (6.1, 6.2, 6.3), und
(B2) Organen (G3) für ein Sortieren der Batterien und Akkumulatoren ohne ferromagnetische Komponente nach ihren Abmessungen, um sie in zwei Gruppen aufzutrennen, nämlich nichtferromagnetische Multi- und Einzelzellen (7.1, 7.2), diese Organe gefolgt von
(C) Organen (12; 16) für ein Sortieren der Batterien und Akkumulatoren einer oder mehrerer der so aufgetrennten Batterie- und Akkumulatorgruppen nach ihrer Zusammensetzung.

9. Vorrichtung gemäss Anspruch 8, dadurch gekennzeichnet, dass die magnetischen Sortierorgane eine magnetische Drehtrommel (M2) und ein magnetisches Hängeförderband ("overband") (M1) einschliessen.

10. Vorrichtung gemäss Anspruch 8 oder 9, dadurch gekennzeichnet, dass die Organe zum Sortieren nach der Zusammensetzung zumindest eine Messvorrichtung (12) für die ferromagnetischen Eigenschaften der Batterien und/oder Akkumulatoren einschliessen.

11. Vorrichtung gemäss Anspruch 8, 9 oder 10, dadurch gekennzeichnet, dass die Organe zum Sortieren nach der Zusammensetzung zumindest eine Anordnung (16) zur Messung der Abmessungen oder anderer innewohnender Eigenschaften der Batterien und/oder Akkumulatoren einschliessen.

12. Vorrichtung gemäss jedem beliebigen der Ansprüche 8 bis 11, dadurch gekennzeichnet, dass die benannten Organe zum Sortieren nach den Abmessungen Roste (G2, G3), bevorzugt vibrierende Roste, umfassen.

## Claims

1. A method of sorting used batteries and accumulators of different shapes and dimensions and of different chemical compositions, comprising at least one step of mechanical sorting according to shapes and dimensions, and at least one step of sorting according to the composition, preferably based on the measurement of at least one physical parameter, wherein batteries and accumulators (4) of different shapes and dimensions and different chemical compositions undergo the following steps :
(a) a magnetic separation by the application of a magnetic field so as to separate, by the action of the magnetic force, those batteries and accumulators (6) having a ferromagnetic component, from those batteries and accumulators (7) having no ferromagnetic component, followed by
(b1) sorting of the batteries and accumulators (6) having a ferromagnetic component according to their size, so as to divide them into at least two groups, preferably into three groups : ferromagnetic multicells, prismatics and monocells (6.1, 6.2, 6.3), and
(b2) sorting of the batteries and accumulators (7) having no ferromagnetic component according to their size, so as to divide them into two groups : non-ferromagnetic multicells and monocells (7.1, 7.2), followed by
(c) at least one step of sorting the batteries and accumulators of one or several of the thus-separated groups according to their chemical composition.

2. A sorting method according to claim 1, wherein step (c) includes a step of sorting the group (6.3) of ferromagnetic monocells according to their chemical composition.

3. A sorting method according to claim 2, wherein said step of sorting according to the chemical composition includes the measurement of at least one physical parameter so as to separate monocells having a ferromagnetic internal component (notably nickelcadmium monocells) (12.1) from monocells with a ferromagnetic envelope, notably mercury and silver monocells (12.2), lithium monocells (12.3), as well as alkaline monocells (12.4) and Zinc-C batteries with a ferromagnetic envelope (12.5).

4. A sorting method according to any one of the preceding claims, wherein the magnetic separation step (a) is preceded by at least one preliminary sorting step according to dimensions, in order to separate very big batteries or accumulators (2) and/or very small batteries or accumulators (3).

5. A sorting method according to any one of the preceding claims, wherein said steps (b1) and (b2) of sorting according to size are carried out by a mechanical method, such as by passing through a grid (G2,G3).

6. A sorting method according to any one of the preceding claims, wherein said step (b2) of sorting the batteries or accumulators (7) having no ferromagnetic component according to their size is followed by sorting non-ferromagnetic multicells (7.1).

7. A sorting method according to claim 6, wherein said sorting of non-ferromagnetic multicells (7.1) is carried out using a detector (16) of the dimensions or other intrinsic properties.

8. An installation for sorting used batteries and accumulators of different shapes and dimensions and different chemical compositions, for carrying out the method according to any one of the preceding claims, which comprises :
(A) means (M1,M2) for magnetically sorting batteries and accumulators of different shapes and dimensions and different chemical compositions, these means acting by application of a magnetic field so as to separate, by a magnetically acting force, those batteries and accumulators (6) having a ferromagnetic component from those batteries and accumulators (7) having no ferromagnetic component, followed by :
(B1) means (G2) for sorting the batteries and accumulators having a ferromagnetic component according to their size, so as to divide them into at least two groups, preferably into three groups : ferromagnetic multicells, prismatics and monocells (6.1, 6.2, 6.3), and
(B2) means (G3) for sorting the batteries and accumulators with no ferromagnetic component according to their size, so as to divide them into two groups, non-ferromagnetic multicells and monocells (7.1, 7.2), followed by
(C) Means (12;16) for sorting the batteries and accumulators of one or several of the thus separated groups of batteries and accumulators according to their chemical composition.

9. Installation according to claim 8, wherein the magnetic sorting means include a rotary magnetic drum (M2) and a magnetic suspension conveyor band ("overband") (M1).

10. Installation according to claim 8 or 9, wherein the means for sorting according to chemical composition include at least one device (12) for measuring the ferromagnetic properties of the batteries and/or accumulators.

11. Installation according to claim 8, 9 or 10, wherein the means for sorting according to the chemical composition include at least one device (16) for measuring the dimensions or other inherent properties of the batteries and/or accumulators.

12. Installation according to any one of claims 8 to 11, wherein said means for sorting according to size comprises grids (G2,G3), preferably vibratory grids.
